# EUROPEAN PATENT APPLICATION

(11) **EP 4 224 375 A1**
(43) Date of publication of application: **09.08.2023**
(21) Application number: 22207174.8
(22) Date of filing: 14.11.2022
(51) Int. Cl.: G06N 5/045, G06N 20/00, G06Q 40/03

(54) **PROGRAM AND METHOD FOR MACHINE LEARNING, AND INFORMATION PROCESSING APPARATUS**

(30) Priority: 02.02.2022 JP 2022015162
(71) Applicant: Fujitsu Limited, Kanagawa 211-8588 (JP)
(72) Inventor: Nakao, Yuri, Kawasaki-shi, Kanagawa, 211-8588 (JP)
(74) Representative: Hoffmann Eitle

(57) **Abstract**

A machine learning program including instructions for obtaining multiple classification results of classification of a plurality of data pieces outputted from a machine learning model into which the plurality of data pieces have been inputted; specifying in accordance with classification results, a first plurality of attributes among a plurality of attributes included in a first plurality of data pieces classified into a first group and a second plurality of data pieces classified into a second group, each difference between each value of the first plurality of attributes of the first plurality of data pieces and each value of the first plurality of attributes of the second plurality of data pieces satisfying a condition; determining labels of the data pieces based on a first index representing a combination of the first multiple attributes; and training the machine learning model, using the labels and the data pieces.

## Description

### [Technical Field]

The embodiment(s) discussed herein is a program and a method for machine learning, and an information processing apparatus.

### [Background Art]

In the field of fairness-aware machine learning, efforts have been made to correct a machine learning model reflecting the discriminatory bias contained in the learning data to a fair model. A technique exists to correct the fairness of a machine learning model based on evaluation of a user in order to flexibly reflect the fairness that varies according to the circumstances. In the following explanation, a machine learning model is sometimes simply referred to as a "model".

As an index for measuring bias included in a machine learning model and data, metrics using an adoption rate, a false-positive rate, and a false-negative rate based on an attribute such as race or gender are used in some cases.

On the other hand, there are a variety of status that can be said to be fair, and the standard for fairness changes according to the circumstance. In some cases, conventional automatic model correction based on a conventional index alone has a difficulty to achieve the fairness. For example, in the employment market, males are generally given preferential treatment over females, but it is more difficult for males to obtain some types of occupation than females.

Therefore, a technique exists to correct a machine learning model to be fair on the basis of the user's subjective evaluation. This technique encourages a user to correct the model while displaying fairness metrics and accuracy metrics.

### [Prior Art Reference]

### [Patent Document]

[Patent Document 1] Japanese Laid-open Patent Publication No. 2021-012593
[Patent Document 2] Japanese National Publication of International Patent Application No. 2019-526107
[Patent Document 3] US patent application Publication No. 2014/0249872
[Patent Document 4] US patent application Publication No.2019/0102700.

### [Summary of Invention]

### [Problems to be Solved by Invention]

However, the above conventional technique does not consider a "criteria searching process" that searches for an evaluation standard that the user really desires to be the fair standard for decision making. Consequently, the conventional technique encourages the user to correct the model while representing only existing fairness metrics, so that there is a possibility that the user gives up to use the system because the model cannot be corrected to a status that the user supposes to be truly fair.

In one aspect, one of the objects of the present invention to correct a machine learning model to be adaptable to a variety of fairness evaluation standards.

### [Means to Solve the Problem]

According to an aspect of the embodiments, a machine learning program is executable by one or more computers, and includes: an instruction for obtaining a plurality of classification results of classification of a plurality of data pieces, the plurality of classification results being outputted from a machine learning model into which the plurality of data pieces have been inputted; an instruction for specifying, in accordance with the plurality of classification results, a first plurality of attributes among a plurality of attributes included in a first plurality of data pieces classified into a first group and a second plurality of data pieces classified into a second group, each difference between each value of the first plurality of attributes of the first plurality of data pieces and each value of the first plurality of attributes of the second plurality of data pieces satisfying a condition; an instruction for determining labels of the plurality of data pieces based on a first index representing a combination of the first plurality of attributes; and an instruction for training the machine learning model, using the labels and the plurality of data pieces.

### [Effect of Invention]

In one aspect, a machine learning model can be corrected to be adaptable to a variety of fairness evaluation standards.

### [Brief Description of Drawings]

FIG. 1 is a diagram illustrating model correction in a related example;
FIG. 2 is a diagram illustrating a problem of the model correction in the related example;
FIG. 3 is a diagram illustrating model correction by a consenting user according to one embodiment;
FIG. 4 is a diagram illustrating model correction by a non-consenting user according to the one embodiment;
FIG. 5 is a diagram illustrating an example of a specifying process of a fairness standard of the one embodiment;
FIG. 6 is a block diagram schematically illustrating an example of a hardware configuration of an AI (machine learning) system of the one embodiment;
FIG. 7 is a diagram illustrating schematically illustrating an example of a software configuration of the AI system of the one embodiment;
FIG. 8 is a flow diagram illustrating an example of the specifying process of a fairness standard of the one embodiment;
FIG. 9 is a diagram illustrating an example of a receiving process of a correction proposal of a machine learning model of FIG. 8:
FIG. 10 is a diagram illustrating an example of a calculating process of an approaching extent to existing metrics of FIG. 8 and a determining process of the approaching extent;
FIG. 11 is a diagram illustrating an example of a calculating process of an index having a large difference between an accepted group and a rejected group of FIG. 8;
FIG. 12 is a diagram illustrating an example of a presenting process of the index having a large difference between an accepted group and a rejected group of FIG. 8;
FIG. 13 is a diagram illustrating an example of the calculating process and the presenting process of the index having the maximum difference between an accepted group and a rejected group of FIG. 8;
FIG. 14 is a diagram illustrating the correcting process of a model of FIG. 8 and the presenting process of model candidates for a corrected model;
FIG. 15 is a diagram illustrating an example of a determining process as to whether or not a particular model candidates of FIG. 8 is selected;
FIG. 16 is a diagram illustrating a first example of an effect derived by a correcting process of a machine learning model of the one embodiment; and
FIG. 17 is a diagram illustrating a second example of the effect derived by a correcting process of the machine learning model of the one embodiment.

### DESCRIPTION OF EMBODIMENT(S)

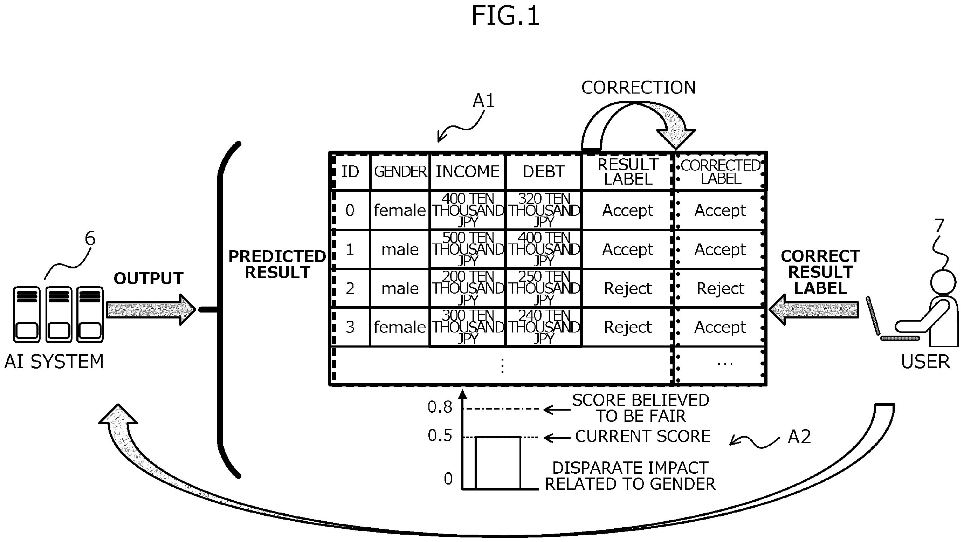

FIG. 1 is a diagram illustrating model correction in a related example.

In the example of FIG. 1, the AI system 6 makes a determination on a loan request, and the user 7 refers to the predicted result output by the AI system 6.

In the example indicated by the reference sign A1, items of ID, gender, income, debt, result label, and corrected label are registered in association with one another in the predicted result. In the result label, a value or Accept or Reject is registered. The user 7 corrects the result label included in the predicted result and registers the value of Accept or Reject as the corrected label. Alternatively, the user 7 may correct not only the result label but also the attribute of the instances that make the loan request, a weighting value for the attribute, and the like.

The AI system 6 re-trains (re-machine-learns) the machine learning model based on the corrected labels inputted by the user 7.

A Disparate Impact related to gender is denoted in the reference sign A2. A disparate Impact is a ratio of adoption rates between attribute values, and a disparate impact of 0.8 (i.e., fairness index) or more may be determined to be fair. A fairness index is a threshold for fairness determination, and a value of a certain fairness metric above (or below) the threshold is considered to represent being fairness. In the example indicated by the reference sign A2, the current value is 0.5 in contrast to the fairness index 0.8.

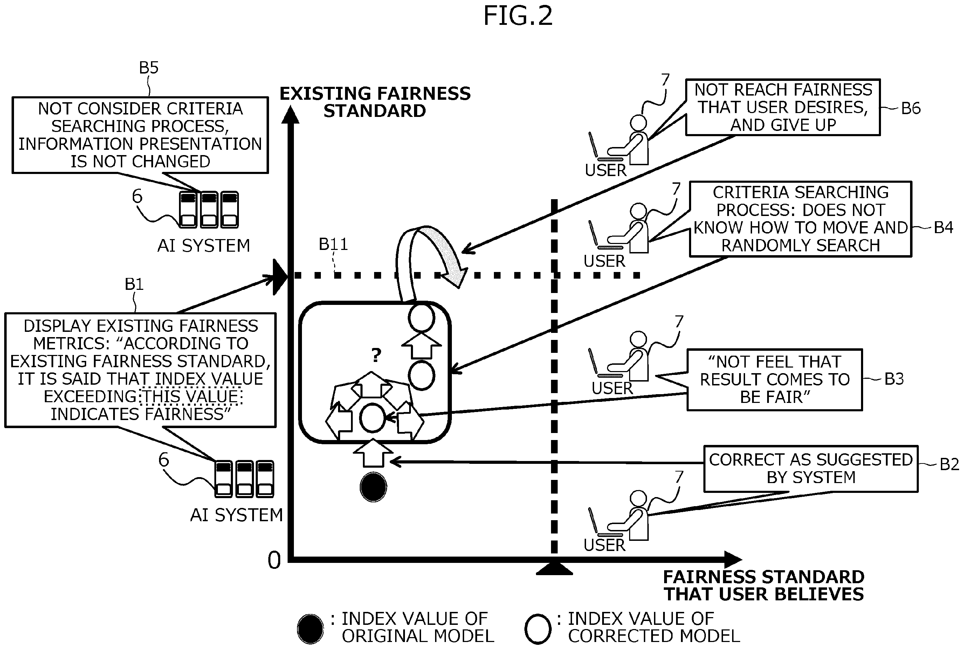

FIG. 2 is a diagram illustrating a problem of the model correction in the related example.

In the graph shown in FIG. 2, the horizontal axis indicates the fairness standard that the user 7 believes, and the vertical axis indicates the existing fairness standard. In the graph shown in FIG. 2, the index that the user 7 believes to be fair may not actually be an axis orthogonal to the existing fairness index, but is schematically represented as an axis assumed to be orthogonal to the existing fairness index.

As indicated by the reference sign B1, the AI system 6 displays the existing fairness metrics to the user 7. The AI system 6 displays, for example, "according to the existing fairness standard, it is said that an index value exceeding this value indicates fairness". The "value" that the AI system 6 displays is a value indicated by the reference sign B11 in FIG. 2. Here, the fairness metric is a measure for evaluating the fairness. For example, a metric named Disparate Impact is a measure represented by (the adoption rate of the discriminated group)/ (the adoption rate of the preferential treatment group).

As indicated by the reference sign B2, the user 7 corrects the index value of the model in the direction as suggested by the AI system 6. In the example of FIG. 2, an index value of the original model is indicated by a black circle, and an index of the corrected model is indicated by a white circle.

As indicated by the reference sign B3, the user 7 considers that, for example, "not feel that result comes to be fair...".

As indicated by the reference sign B4, the user 7 executes a criteria searching process. The user 7 does not know how to move the index value of the model and randomly searches. Here, the criteria include both a metrics and a fairness standard. Once both the metric and the fairness standard are established, the criteria are established.

As indicated by the reference sign B5, the AI system 6 does not consider the criteria searching process and therefore does not change the information presentation.

Then, as indicated by the reference sign B6, the index value of the model does not reach the fairness that user 7 desires, and the user 7 gives up to use the AI system 6.

The fairness criteria considered (used) by the AI system 6 in the related example as illustrated in FIG. 2 are limited, and are mainly generated from the ratio of positive cases between a discriminated group and a preferential treatment group and a difference and/or a ratio of the accuracy between a discriminated group and a preferential treatment group.

On the other hand, a variety of evaluation standards to be considered by the user 7 in the determination of fairness are present, and for example, in the case of loan determination, it is fairer to determine the ratio between the income and the debt.

Therefore, the user 7 may feel uncomfortable with the metrics presented by the AI system 6. If feeling discomfort, the user 7 will search for how to correct the model so that the model comes to be fair according to the fairness metrics that the user 7 him/her-self believes while correcting the model by means of the criteria searching process.

The AI system 6 of the related example displays only the existing fairness metrics, not considering this criteria searching process. Accordingly, the user 7 does not reach the satisfactory fairness standard and finishes the correction.

Hereinafter, an embodiment will now be described with reference to the accompanying drawings. However, the embodiment described below is merely illustrative and is not intended to exclude the application of various modifications and techniques not explicitly described below. For example, the present embodiment can be variously modified and implemented without departing from the scope thereof. In addition, the term "metrics" represents a concept including both a metric and metrics, and similarly, term "criteria" represents a concept including both a criterion and criteria.

In the drawings to be used in the following description, the same reference numbers denote the same or similar parts, so repetitious description will be omitted here.

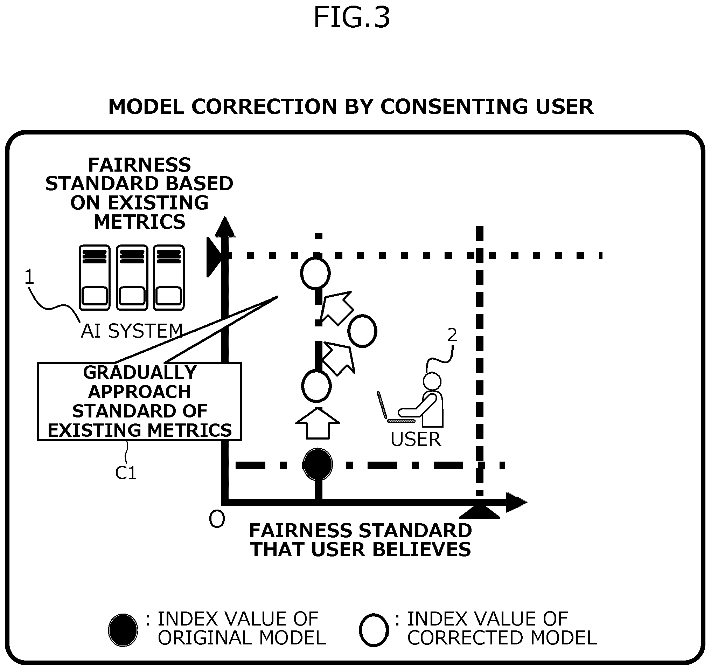

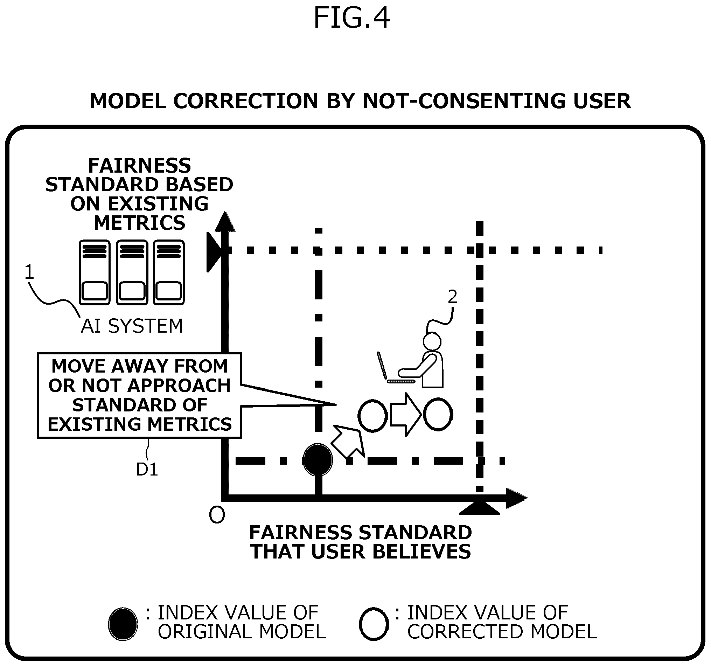

FIG. 3 is a diagram illustrating model correction by a consenting user according to the one embodiment; and FIG. 4 is a diagram illustrating model correction by a non-consenting user according to the one embodiment.

The AI system 1 according to the embodiment asks the user 2 to present the fairness standard that the user 2 believes in advance and corrects the machine learning model.

However, the user 2 does not always recognize the fairness standard that he/she believes from the beginning, and is sometimes incapable of specifying the fairness standard in advance.

Specification of the fairness evaluation standard needs to understand how a metric value changes when how the machine learning model is modified.

Therefore, the user 2 is demanded to know how the metrics change through correction (e.g., correction of weight application to an attribute value, re-labeling of the correct answer label) of the model, and to know what the appropriate feasible metrics is. For example, an AI system 1 which makes determination on loan request may receive two incompatible metrics that the adoption rate needs to be changed with income and that the loan request needs to be equally accepted by age. Since income tends to rise as age increases, so there is a high possibility that equality by age and change in an adoption rate by income are incompatible.

As a solution to the above, the AI system 1 of the one embodiment clarifies a metric that determines the fairness evaluation standard through the interaction of the AI system 1 with the user 2.

In FIG. 3 and FIG. 4, a black circle represents an index value of an original model, and a white circle indicates an index value of a corrected model.

In the model correction by a user (hereinafter sometimes referred to as "consenting user") 2 that consents to the existing fairness standard in FIG. 3, the index value of the model approaches the fairness based on the existing metrics each time the model is corrected as indicated by the reference sign C1.

The model correction by a user (hereinafter referred to as "non-consenting user") that does not consent to the existing fairness standard in FIG. 4 results in the reference sign D1. For example, even if the model is corrected, the index value of the model moves away from the fairness based on the existing metrics or does not approach the fairness based on the existing metrics (in other words, deviation from the criteria increases or does not change).

To deal with this, the AI system 1 changes information presented to the user 2 that has entered the criteria searching process.

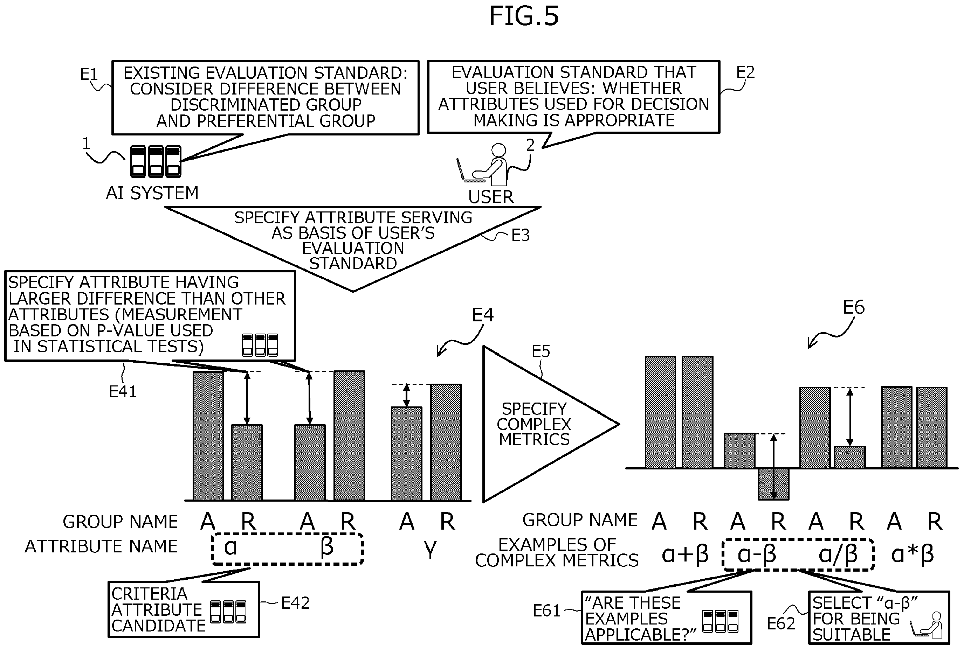

FIG. 5 is a diagram illustrating an example of a specifying process of a fairness standard of the one embodiment.

The AI system 1 specifies, as a fairness standard, an evaluation standard at which models corrected by a non-consenting user 2 classified into the accepted group and the rejected group.

The accepted group is a group of instances that bring better results among the models that are being corrected, and higher-ranked instances in ranking or the positive example of the two-value classification. The rejected group is a group of instances that brings worse results among the models that are being corrected.

The basis of the fairness for the user 2 represents whether or not an attribute serving as the basis for decision making seems to be fair. For this reason, it is conceivable to specify an attribute that is likely to serve as a reference for the correction by the user 2.

The AI system 1 specifies multiple attributes each having a large differences between the accepted group and the rejected group as criteria attribute candidates. In addition, the AI system 1 combines the criteria attribute candidates to generate combined metrics that have a larger difference between the accepted group and the rejected group.

Then, the AI system 1 presents a model correction proposal candidates, and causes the user 2 to specify the metrics that the user desires to actually consider.

In the example illustrated in FIG. 5, as indicated by the reference sign E1, the AI system 1 considers, as an existing evaluation standard, a difference between the discriminated group and the preferential treatment group. As denoted by the reference sign E2, the user 2 determines whether the attribute used for decision making is appropriate on the basis of the evaluation standard that the user believes.

As indicated by the reference sign E3, the AI system 1 specifies an attribute serving as a basis of the evaluation standard of the user 2.

In the reference sign E4, the evaluation standards of the accepted group (A) and the rejected group (R) are represented by bar graphs for each of the attribute names α, β, and γ. As indicated by the reference sign E41, the AI system 1 specifies an attribute having a larger difference between the accepted group and the rejected group than other attributes by measurement with the p-value of the statistical test or the like. In the example of FIG. 5, as indicated by the reference sign E42, the AI system 1 specifies the attribute names α and β as criteria attribute candidates.

As indicated by the reference sign E5, the AI system 1 specifies a combined metrics. In the example indicated by the reference sign E6, α+β, α-β, α/β, and α*β are specified as the combined metrics by the AI system 1.

As indicated by the reference sign E61, the AI system 1 presents, to the user 2, α-β and α/β that, among the specified combined metrics, have larger differences between the accepted group and the rejected group than the other groups. In the example illustrated by the reference sign E62, the user 2 selects the combined metric α-β.

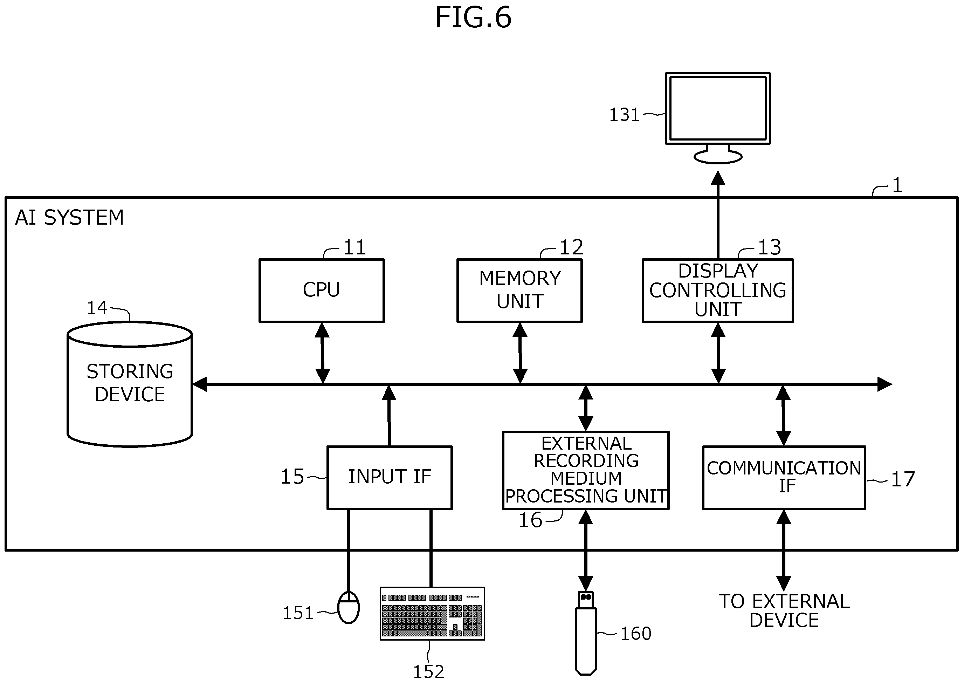

FIG. 6 is a diagram schematically illustrating an example of a hardware configuration of the AI system 1 of the one embodiment.

As illustrated in FIG. 6, the AI system 1 is an example of an information processing apparatus, and includes a Central Processing Unit (CPU) 11, a memory unit 12, a display controlling unit 13, a storing device 14, an input interface (IF) 15, an external recording medium processing unit 16, and a communication IF 17.

The memory unit 12 is an example of a storing unit, and is exemplified by a Read Only Memory (ROM) and a Random Access Memory (RAM). Into the ROM of the memory unit 12, a program such as a Basic Input/Output System (BIOS) may be written. The software program in the memory unit 12 may be appropriately read and executed by the CPU 11. The RAM of the memory unit 12 may be used as a temporary recoding medium or a working memory.

The display controlling unit 13 is connected to a displaying device 131 and controls the displaying device 131. The displaying device 131 is exemplified by a liquid crystal display, an Organic Light-Emitting Diode (OLED) display, a Cathode Ray Tube (CRT), an electronic paper display, and displays various pieces of information to the operator. The displaying device 131 may be combined with an input device and may be a touch panel. The displaying device 131 displays various pieces of information to the user 2.

The storing device 14 is one having high IO performance, and may be, for example, a Dynamic Random Access Memory (DRAM), an SSD, a Storage Class Memory (SCM), and a HDD.

The input IF 15 may be connected to an input device such as a mouse 151 and a keyboard 152, and may control the input device such as the mouse 151 and the keyboard 152. The mouse 151 and the keyboard 152 is an example of an input device and the operator makes an input operation using these input devices.

The external recording medium processing unit 16 is configured to allow a non-transitory recording medium 160 is mountable thereon. The external recording medium processing unit 16 is configured to be capable of reading, in a state of being mounted with the recording medium 160, information recorded in the recording medium 160. In the present embodiment, the recording medium 160 is portable. Examples of the recording medium 160 is a flexible disk, an optical disk, a magnetic disk, a magneto-optical disk, and a semiconductor memory.

The communication IF 17 is an interface that allows the AI system 1 to communicate with an external device.

The CPU 11 is an example of a processor, and is a processing device that carries out various controls and calculations. The CPU 11 achieves various functions by executing an operating system (OS) and a program read into the memory unit 12. The CPU 11 may be a multiprocessor including multiple processors, may be a multicore processor having multiple processor cores, or may have a configuration having multiple multicore processors.

The device that controls the overall operation of the AI system 1 is not limited to the CPU 11, but may alternatively be, for example, one of a Micro Processing Unit (MPU), a Graphics Processing Unit (GPU), an Accelerated Processing Unit (APU), a Digital Signal Processor (DSP), an Application Specific Integrated Circuit (ASIC), a Programmable Logic Device (PLD) and a Field Programmable Gate Array (FPGA).

The device that controls the overall operation of the AI system 1 may alternatively be a combination of two or more of a CPU, an MPU, a GPU, an APU, a DSP, an ASIC, a PLD, and an FPGA. As an example, the AI system 1 may include an accelerator (represented by a reference number 11, for example) 11. The accelerator 11 is a hardware device that executes an arithmetic operation used for calculation for a neural network, such as matrix arithmetic operation, and trains a machine learning model, for example. Examples of the accelerator 11 are a GPU, an APU, a DSP, an ASIC, a PLD, and a FPGA.

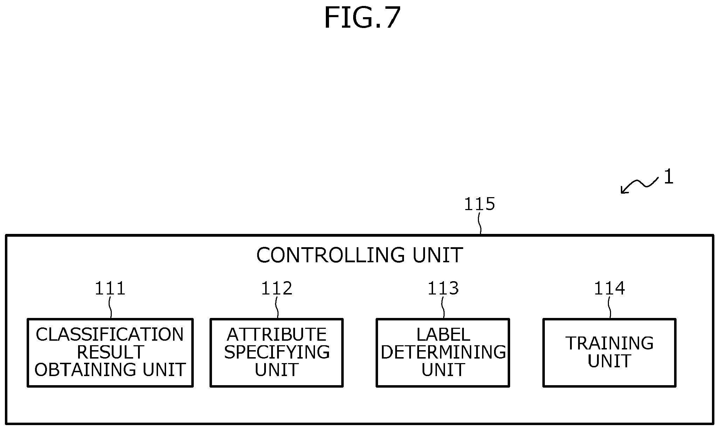

FIG. 7 is a block diagram illustrating schematically illustrating an example of a software configuration of the AI 1 system of the one embodiment.

The CPU 11 of the AI system illustrated in FIG. 6 functions as a classification result obtaining unit 111, an attribute specifying unit 112, a label determining unit 113, and a training unit 114. The classification result obtaining unit 111, the attribute specifying unit 112, the label determining unit 113, and the training unit 114 is an example of a controlling unit 115.

The classification result obtaining unit 111 obtains multiple classification results of multiple pieces of data, the classification results being outputted from a machine learning model into which the multiple pieces of data have been inputted.

In accordance with the multiple classification results obtained by the classification result obtaining unit 111, the attribute specifying unit 112 specifies multiple attributes included both in first multiple pieces of first data classified into the first group and second multiple pieces of data classified into the second group among the multiple pieces of data. The attribute specifying unit 112 specifies, among the specified multiple attributes, first multiple attributes each having a difference (for example, a p-value) in values between the first multiple data pieces and the second multiple data pieces satisfies a standard (in other words "condition", for example, the top N attributes, where N is a natural number). In other words, each difference between each value of the first multiple attributes of the first multiple data pieces and each value of the first multiple attributes of the second multiple data pieces satisfies a condition . The first group is an example of an accepted group, and the second group is an example of a rejected group.

The label determining unit 113 determines a label of each of the multiple pieces of data based on a first index (in other words, combined metrics) obtained by combining the multiple first attributes.

The training unit 114 trains the machine learning model on the basis of the labels determined by the label determining unit 113 and the multiple pieces of data.

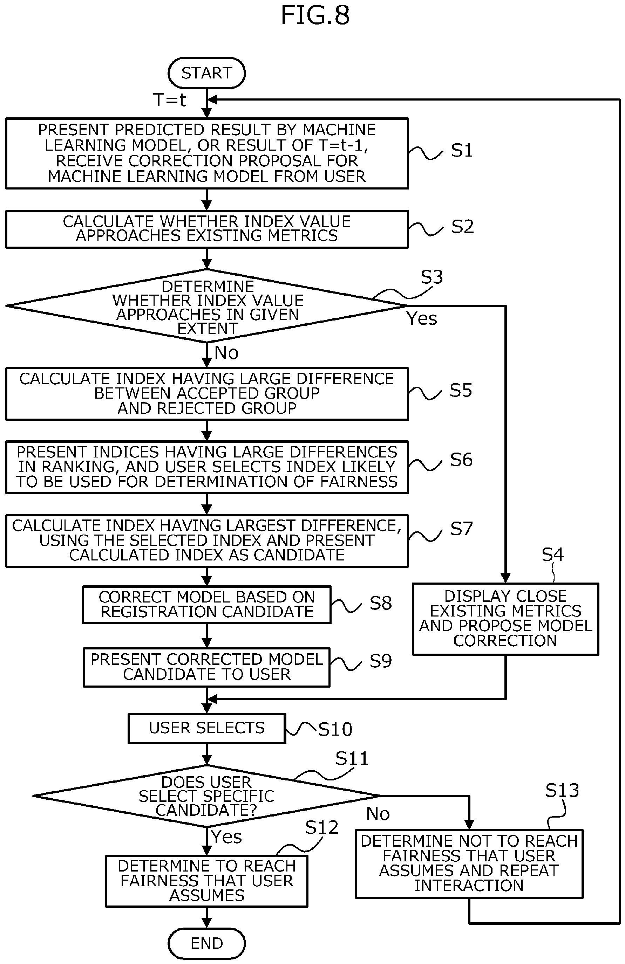

Description will now be made in relation to a specifying process of the fairness standard of the one embodiment with reference to the flow diagram (Steps S1 to S13) of FIG. 8.

The predicted result obtained by using a machine learning model under the condition of T=t or the result under the condition of T=t-1 is presented to the user 2, and a correction proposal of the machine learning model is received from the user 2 (Step S1).

Whether the index value approaches the existing metrics is calculated (Step S2).

Whether the index value is approaching the existing metrics is determined (Step S3).

If the index value is approaching the existing metrics (see Yes route in step S3), a model correction is proposed to the user 2 by displaying the existing metric with a short distance (Step S4). Then, the process proceeds to Step S10.

On the other hand, if the index value is not approaching the existing metrics (see No route in step S3), an index having a large difference between the accepted group and the rejected group is calculated (Step S5).

Indices having large differences are presented in ranking, and a selection for an index likely to be used for determination of the fairness by the user 2 is received (step S6).

Using the selected indices, combined metrics having the largest difference is calculated and presented as candidate combined metrics (Step S7).

Then, the model correction based on the registered candidate is performed (Step S8).

The model candidates for a corrected model is presented to the user 2 (Step S9).

The selection for a model from the user 2 is received (Step S10) .

Determination is made as to whether a specific candidate has been selected (Step S11) .

If it is determined that the specific candidate has been selected (see Yes route in Step S11), it is determined that the fairness standard that the user 2 assumes has been reached (Step S12). Then, the specifying process of the fairness standard ends.

On the other hand, if it is determined that the specific candidate has not been selected (see No route in Step S11), it is determined that the fairness standard that the user 2 assumes has not been reached, and the process returns to Step S1 and the interaction is repeated under the condition of T=t+1 (Step S13).

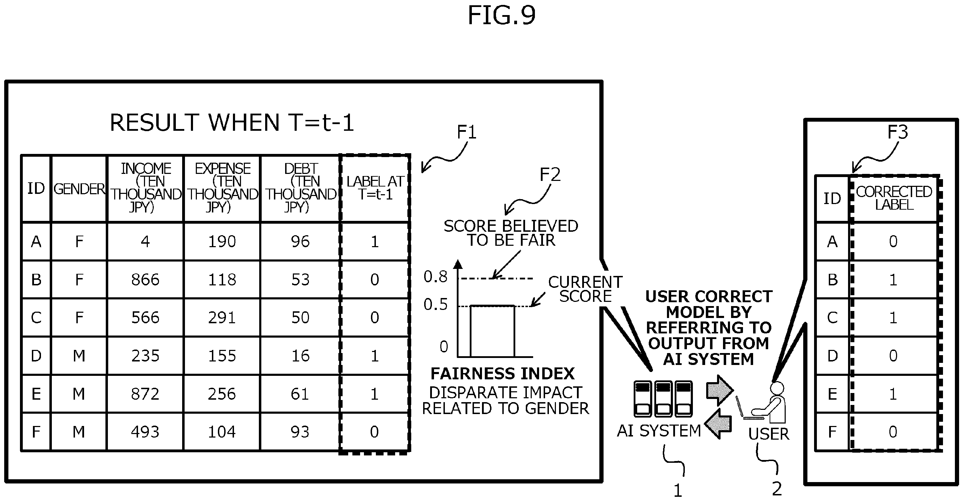

FIG. 9 is a diagram illustrating an example of a receiving process (Step S1) of a correction proposal of a machine learning model of FIG. 8.

The AI system 1 outputs information of the predicted result, the attribute values, and the fairness standard to the user 2. During the first loop, the AI system 1 directly outputs the predicted result of the machine learning. If the user 2 provides a feedback, the AI system 1 outputs the result obtained under the condition of T=t-1.

The user 2 inputs the correction information of the model based on the above output into the AI system 1.

In the example of FIG. 9, the reference sign F1 illustrates a table used by the AI system 1 for determining whether to loan to a person on the basis of income, expense, and debt. A label of T=t-1 indicates that 1 represents "accepted" and 0 represents "rejected".

The reference sign F2 indicates a Disparate Impact related to gender. A Disparate Impact is a ratio of adoption rates between attribute values, and if being a fairness index, for example, 0.8, or higher, the Disparate Impact may be determined to represent the fairness. A fairness index is a threshold for fairness determination, and a value of a certain fairness metric above (or below) the threshold is considered to represent being fairness. In the example indicated by the reference sign F2, the current value is 0.5 in contrast to the fairness index 0.8.

As indicated by the reference sign F3, the user 2 corrects the label to correct the model.

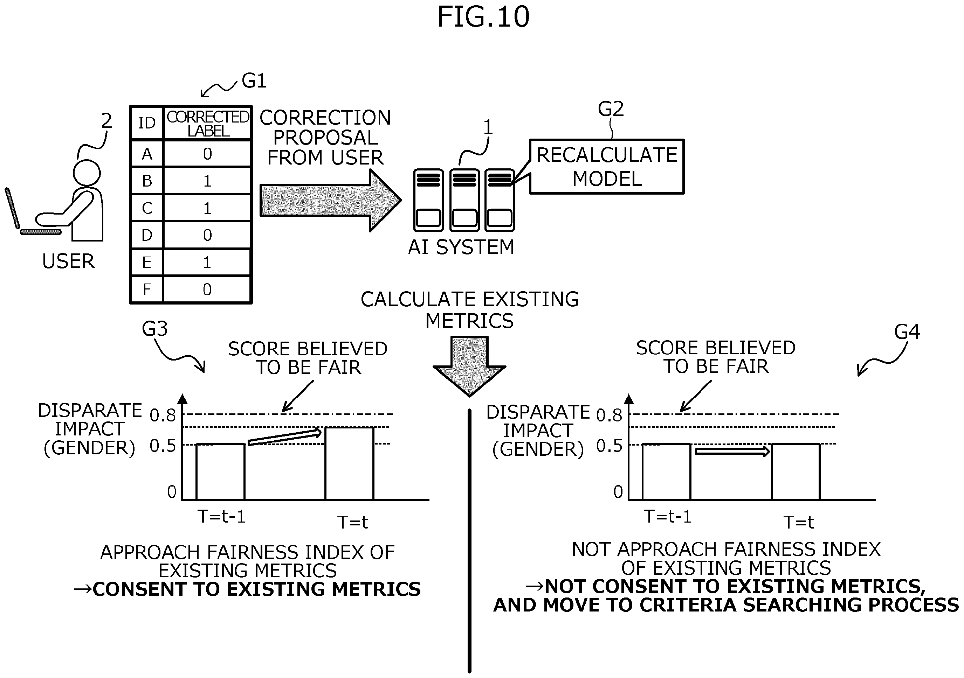

FIG. 10 is a diagram illustrating an example of a calculating process (Step S2) of an approaching extent to existing metrics of FIG. 8 and a determining process (Step S3) of the approaching extent.

As indicated by the reference signs G1 and G2, the AI system 1 corrects the model, in other words retrains (recalculates) the model on the basis of a correction proposal of the label from the user 2.

The AI system 1 calculates whether the corrected model is approaching the fairness standard that the AI system 1 presents.

In the example of FIG. 10, a Disparate Impact related to gender is calculated for the fairness. If the degree of approaching is not a certain level or higher, the user 2 is determined to not consent to the existing fairness standard being presented and consequently enter the criteria searching process.

In the example of the reference sign G3, the user 2 consents because the value of the Disparate Impact approaches the fair value by 0.2. On the other hand, in the example of the reference sign G4, since the value of the Disparate Impact is not approaching the fair value at all (i.e., approaching by zero), the user 2 is determined to enter criteria searching process.

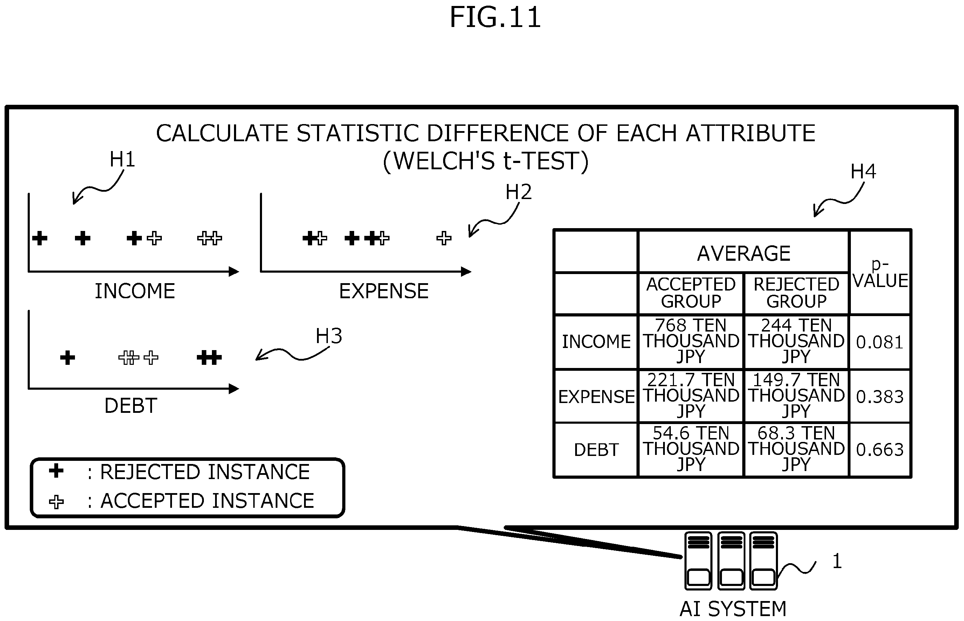

FIG. 11 is a diagram illustrating an example of a calculating process (Step S5) of an index having a large difference between an accepted group and a rejected group of FIG. 8.

Upon entering the criteria searching process, the AI system 1 examines an attribute that the user 2 is likely to be using in making decision.

The AI system 1 calculates a statistical difference between a rejected group and the accepted group for each attribute using the corrected model.

In the example of FIG. 11, the AI system 1 measures the magnitude of the derived p-values by performing a statistical test, such as a Welch's t-test, between the rejected group and the accepted group on the items of income (the reference sign HI), expense (the reference sign H2), and debt (the reference sign H3) . Then, as indicated by the reference sign H4, the AI system 1 registers the averages of the accepted group and the rejected group and the p-value between accepted group and the rejected group for each of the items of income, expense, and debt in a table form. A smaller p-value is considered to represent a higher possibility of the presence of a statistical difference. Various methods except for the Welch's t-test may be applied to measure the magnitude of a p-value.

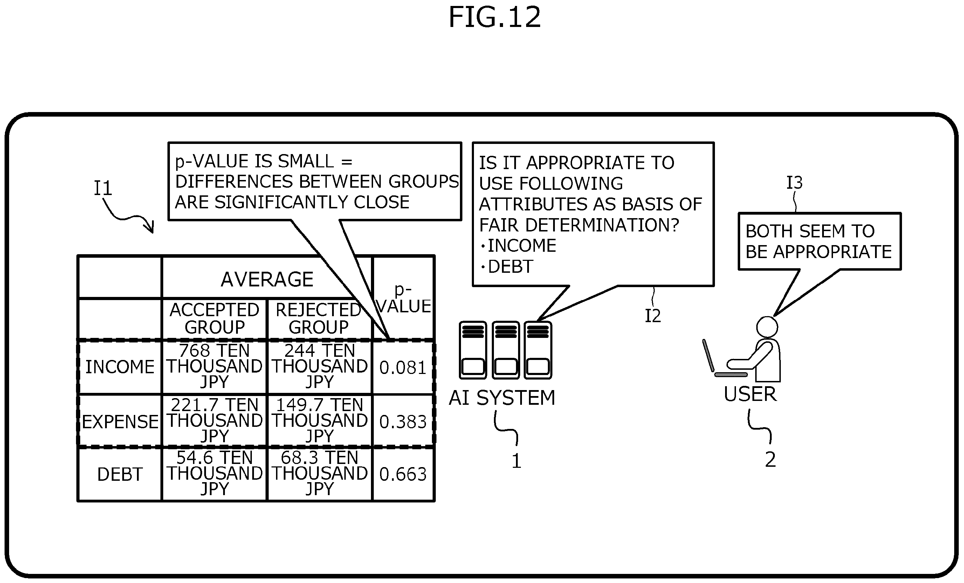

FIG. 12 is a diagram illustrating an example of a presenting process (Step S6) of the index having a large difference between the accepted group and the rejected group of FIG. 8.

The AI system 1 determines the top N items having the N largest differences among the differences between the rejected group and the accepted group calculated in Step S5 of FIG. 8.

The AI system 1 presents, to the user 2, the selected top N items as criteria attribute candidates that the user 2 is likely to use for fair decision making.

The AI system 1 accepts selection for a criteria attribute from the user 2.

In the example of FIG. 12, as indicated by the reference sign II, the AI system 1 presents, to the user 2, the top two items having small p-values and differences between groups (the rejected group and the accepted group) significantly far from each other. As indicated by the reference sign 12, the AI system 1 presents, to the user 2, "income" and "expense" as attribute candidates to be used as a basis for fair decision. As indicated by the reference sign 13, the user 2 determines that "both seem to be appropriate" and selects the both "income" and "expense". Alternatively, the user 2 may select either one of the two items.

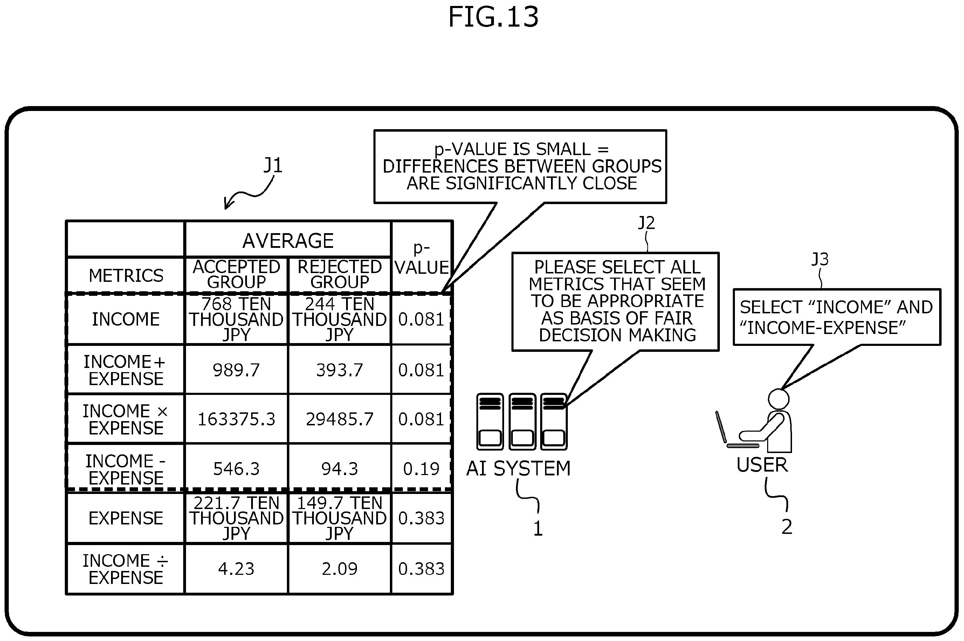

FIG. 13 is a diagram illustrating an example of the calculating process and the presenting process (Step S7) of the metrics having a maximum difference between an accepted group and a rejected group of FIG. 8.

On the basis of the criteria attributes selected in Step S6 in FIG. 8, the AI system 1 generates a combined metric that is a combinations of the attributes.

In the example of the reference sign J1 in FIG. 13, the AI system 1 generates multiple combined metrics covering the four fundamental arithmetic operations between the criteria attributes. The AI system 1 calculates the difference between the accepted group and the rejected group of the combined metrics. A p-value based on Welch's t-test may be used as a value indicative of the statistical difference. The AI system 1 determines the top M items (M is a natural number; in the example of FIG. 13, M=4) having small p-values and differences between the groups significantly far from each other.

As indicated by the reference sign J2, the AI system 1 presents the M data to the user 2 and encourages the user 2 to select one or more appropriate metrics.

As indicated by the reference sign J3, the user 2 selects "income" and "(income)-(expense)" as appropriate metrics.

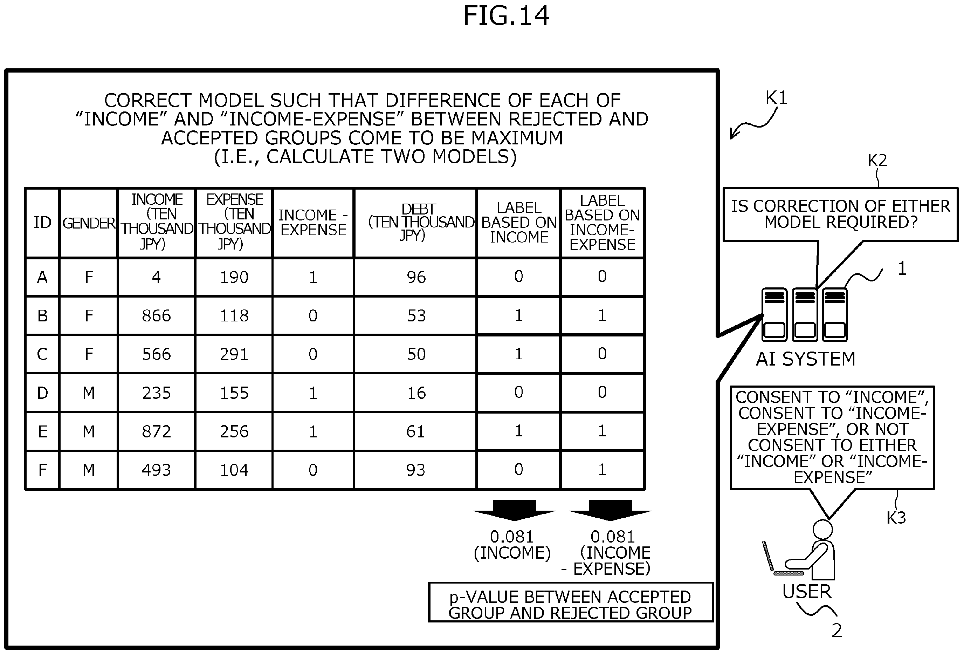

FIG. 14 is a diagram illustrating a correcting process (Step S8) of a model of FIG. 8 and a presenting process (Step S9) of model candidates for a corrected model.

The AI system 1 corrects the model by using the selected combined metrics such that the difference of the rejected group and the accepted group comes to be the maximum. For example, the AI system 1 retrains the model by re-labeling such that the difference is maximized. In the case of the reference sign K1, the model is corrected to maximize the differences between the rejected group and the accepted group for each of "income" and "(income)-(expense)".

Then, the AI system 1 presents the result to the user 2 as indicated by the reference sign K2, and causes the user 2 to select whether or not a correction result that can be consented is present as indicated by the reference sign K3.

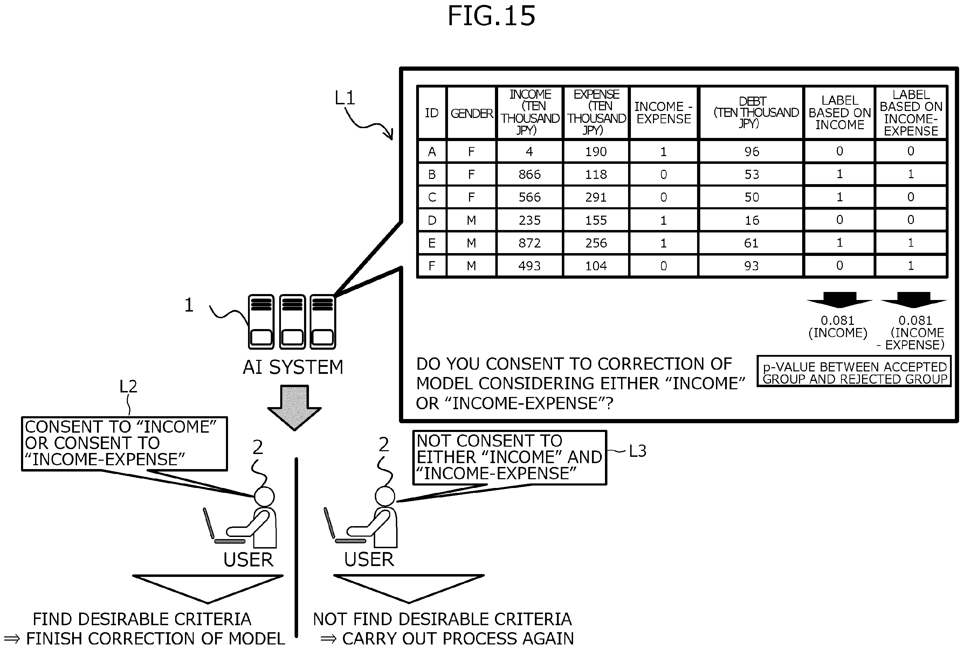

FIG. 15 is a diagram illustrating an example of a determining process (Step S11) as to whether or not a particular model candidates of FIG. 8 is selected.

As indicated by the reference sign L1, the AI system 1 asks the user 2 whether the user 2 is likely to consent to either model correction considering "income" or "(income)-(expense)."

If a correction result that can be consented is present as a result of selection illustrated in Step S10 of FIG. 8, the AI system 1 assumes that the user 2 has found desired criteria, as indicated by the reference sign L2, and ends the use of the system.

On the other hand, if no correction result that can be consented is present, the AI system 1 repeats the process from Step S1 of FIG. 8 since it is considered that a desired criterion is not found, as indicated by the reference sign L3.

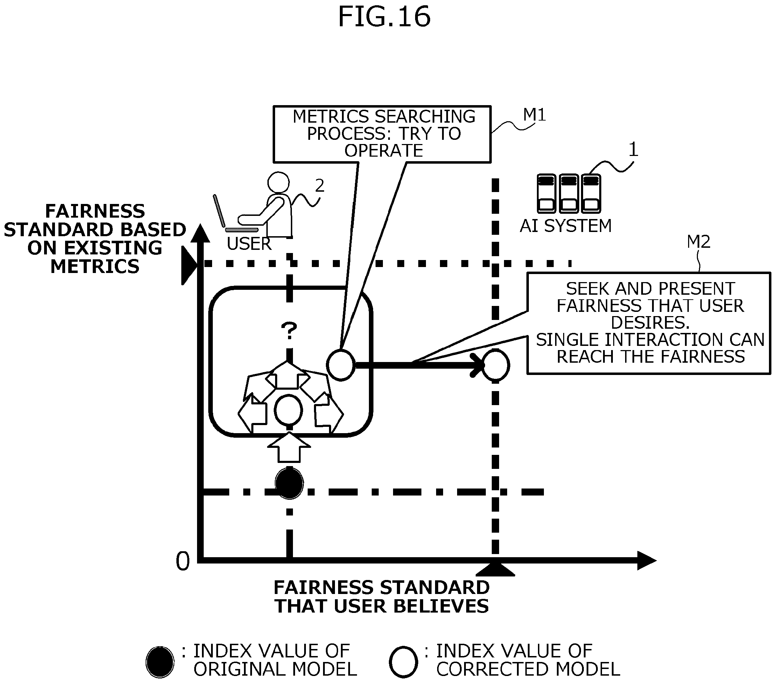

FIG. 16 is a diagram illustrating a first example of an effect derived by a correcting process of a machine learning model of the one embodiment.

As indicated by the reference sign M1, the user 2 tries to operate an index value by means of a metrics searching process. As indicated by the reference sign M2, the AI system 1 seeks and presents the fairness that the user 2 desires.

This allows user 2, even if entering the criteria searching process, to quickly reach the fair model that the user 2 believes in a single interaction.

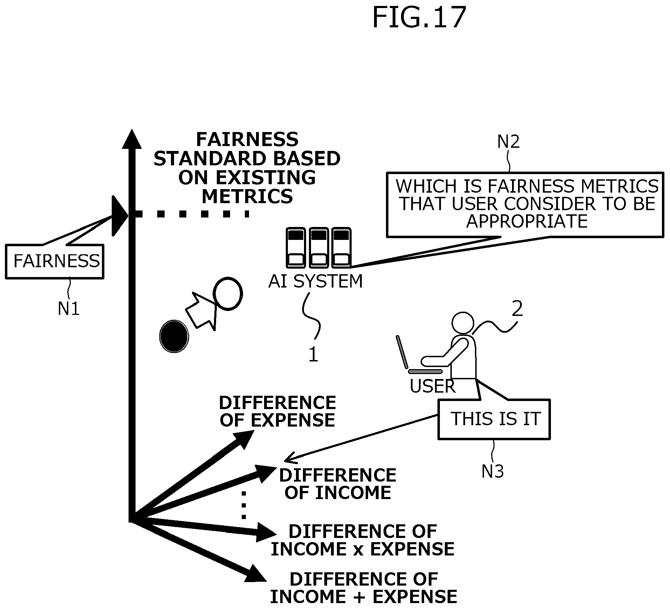

FIG. 17 is a diagram illustrating a second example of the effect derived by a correcting process of the machine learning model of the one embodiment.

As indicated by the reference sign N2, the AI system 1 can present, to the user 2, a variety of metrics that have not conventionally been clarified in the related example illustrated in FIG. 2, which uses only a fairness standard based on the existing metrics indicated by the reference sign N1. Consequently, as indicated by the reference sign N3, it is possible to clarify an appropriate metric based on the subjectivity of the user 2 by the user 2 selecting one or more metrics from among a variety of metrics that the AI system 1 presents.

The classification result obtaining unit 111 obtains multiple classification results of multiple pieces of data. The multiple classification results are outputted from a machine learning model into which the multiple pieces of data have been inputted. On the basis of the multiple classification results obtained by the classification result obtaining unit 111, the attribute specifying unit 112 specifies multiple attributes included both in first multiple pieces of data classified into the first group and second multiple pieces of data classified into the second group among the multiple pieces of data. The attribute specifying unit 112 specifies, among the specified multiple attributes, first multiple attributes each having a difference between the value of the attribute of the first data piece and the value of the attribute of the second data piece satisfying a standard. In other words, the attribute specifying unit 112 specifies first multiple attributes, among the specified multiple attributes, each difference between each value of the first multiple attributes of the first multiple data pieces and each value of the first multiple attributes of the second multiple data pieces satisfying a standard (i.e., condition). The label determining unit 113 determines a label of each of the multiple data pieces based on a first index obtained by combining the first multiple attributes. The training unit 114 trains the machine learning model on the basis of the labels determined by the label determining unit 113 and the multiple data pieces.

Thereby, the machine learning model can be corrected to be adaptable to a variety of fairness evaluation standards.

The label determining unit 113 determines the label based on the first index represented by the four fundamental arithmetic operations of the multiple first attributes. This can determine a label based on an appropriate first index.

The label determining unit 113 generates multiple first indices and presents the first indices to the user 2; receives selection of one or more first indices among the multiple first indices from the user 2; and determines a label based on the one or more first indices the selection for which have been received. This can determine a label based on the one or more first indices that satisfies the demand of the user 2.

The disclosed techniques are not limited to the embodiment described above, and may be variously modified without departing from the scope of the present embodiment. The respective configurations and processes of the present embodiment can be selected, omitted, and combined according to the requirement.

In the above-described one embodiment, description has been made for a correction process on a machine learning model in a classification task, but the target task of the one embodiment is not limited to this. The correcting process on a machine learning model in the one embodiment can be applied to various tasks.

### [Description of Reference Sign]

- 1,6:: AI system
- 2,7 :: user
- 11 :: CPU
- 12 :: memory unit
- 13 :: display controlling unit
- 14 :: storing device
- 16 :: external recording medium processing unit
- 111 :: classification result obtaining unit
- 112 :: attribute specifying unit
- 113 :: label determining unit
- 114 :: training unit
- 115 :: controlling unit
- 131 :: display device
- 151 :: mouse
- 152 :: keyboard
- 160 :: recording medium
- 15 :: input IF
- 17 :: communication IF

## Claims

1. A machine learning program executable by one or more computers, the machine learning program comprising:
an instruction for obtaining a plurality of classification results of classification of a plurality of data pieces, the plurality of classification results being outputted from a machine learning model into which the plurality of data pieces have been inputted;
an instruction for specifying, in accordance with the plurality of classification results, a first plurality of attributes among a plurality of attributes included in a first plurality of data pieces classified into a first group and a second plurality of data pieces classified into a second group, each difference between each value of the first plurality of attributes of the first plurality of data pieces and each value of the first plurality of attributes of the second plurality of data pieces satisfying a condition;
an instruction for determining labels of the plurality of data pieces based on a first index representing a combination of the first plurality of attributes; and
an instruction for training the machine learning model, using the labels and the plurality of data pieces.

2. The machine learning program according to claim 1, wherein the determining comprises determining the labels based on the first index represented by at least one of four fundamental arithmetic operations on the first plurality of attributes.

3. The machine learning program according to claim 1 or 2, further comprising an instruction for receiving selection for one or more of a plurality of the first indices, wherein
the determining comprises determining the labels based on the selected one or more first indices.

4. A machine learning method comprising:
obtaining a plurality of classification results of classification of a plurality of data pieces, the plurality of classification results being outputted from a machine learning model into which the plurality of data pieces have been inputted;
specifying, in accordance with the plurality of classification results, a first plurality of attributes among a plurality of attributes included in a first plurality of data pieces classified into a first group and a second plurality of data pieces classified into a second group, each difference between each value of the first plurality of attributes of the first plurality of data pieces and each value of the first plurality of attributes of the second plurality of data pieces satisfying a condition;
determining labels of the plurality of data pieces based on a first index representing a combination of the first plurality of attributes; and
training the machine learning model, using the labels and the plurality of data pieces.

5. The machine learning method according to claim 4, wherein the determining comprises determining the labels based on the first index represented by at least one of four fundamental arithmetic operations on the first plurality of attributes.

6. The machine learning method according to claim 4 or 5, further comprising receiving selection for one or more of a plurality of the first indices, wherein
the determining comprises determining the labels based on the selected one or more first indices.

7. An information processing apparatus comprising:
a controlling unit (11) that
perform obtaining of a plurality of classification results of classification of a plurality of data pieces, the plurality of classification results being outputted from a machine learning model into which the plurality of data pieces have been inputted,
perform specification of a plurality of, in accordance with the plurality of classification results, a first plurality of attributes among a plurality of attributes included in a first plurality of data pieces classified into a first group and a second plurality of data pieces classified into a second group, each difference between each value of the first plurality of attributes of the first plurality of data pieces and each value of the first plurality of attributes of the second plurality of data pieces satisfying a condition,
perform determination of labels of the plurality of data pieces based on a first index representing a combination of the first plurality of attributes, and
perform training of the machine learning model, using the labels and the plurality of data pieces.

8. The information processing apparatus according to claim 7, wherein the determination comprises determining the labels based on the first index represented by at least one of four fundamental arithmetic operations on the first plurality of attributes.

9. The information processing apparatus according to claim 7 or 8, wherein
the controlling unit further performs reception of selection for one or more of a plurality of the first indices, and
the determination comprises determining the labels based on the selected one or more first indices.
